# EUROPÄISCHE PATENTSCHRIFT

(11) **EP 1 557 355 B1**
(45) Veröffentlichungstag und Bekanntmachung des Hinweises auf die Patenterteilung: **21.01.2009**
(21) Anmeldenummer: 05006230.6
(22) Anmeldetag: 13.06.2001
(51) Int. Cl.: B64D 11/00

(54) **Passagierkabinenausstattungssystem sowie ein Verfahren zur Durchführung einer Passagierkabinenausstattung**
Aircraft passenger cabin interior configuration and related method
Aménagement intérieur d'une cabine passager d'un avion de transport ainsi que procédé pour l'aménagement d'une telle cabine

(30) Priorität: 15.06.2000 DE 10029369
(43) Veröffentlichungstag der Anmeldung: 27.07.2005
(62) Teilanmeldung aus: 01114285.8
(73) Patentinhaber: Airbus Deutschland GmbH, 21129 Hamburg (DE)
(72) Erfinder: Nieberle, Jan, 22085 Hamburg (DE)
(74) Vertreter: Klöpper, Ute

(56) Entgegenhaltungen:
- EP-A- 0 437 870
- EP-A- 0 614 806
- EP-A- 0 718 189
- EP-A- 0 983 938
- US-A- 4 541 595
- US-A- 4 947 762
- US-A- 5 086 996
- US-A- 5 108 048
- US-A- 5 129 597
- US-A- 5 201 831

## Beschreibung

Die Erfindung betrifft ein Verfahren zur Durchführung einer Passagierkabinenausstattung.

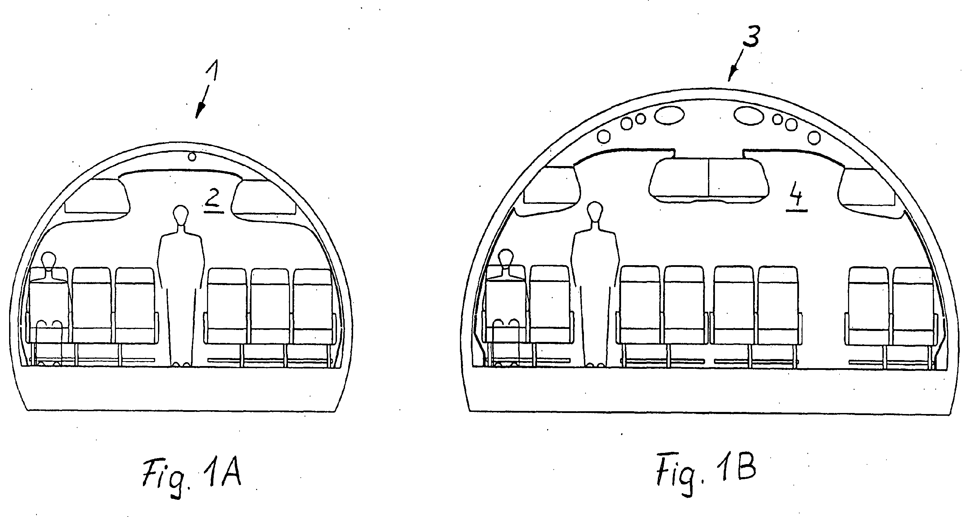

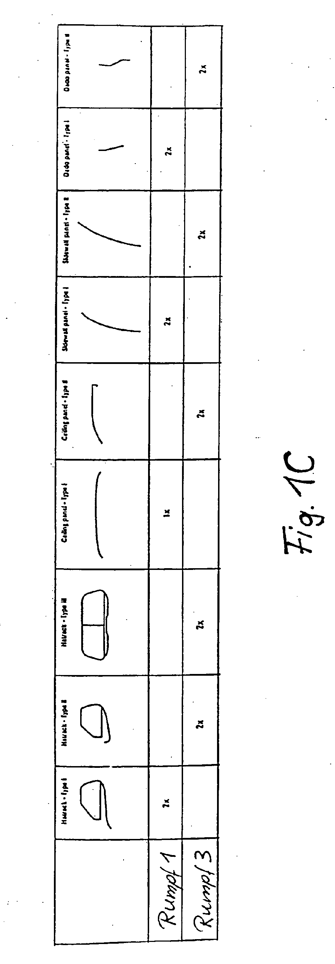

An Flugzeugpassagierkabinen werden im Zuge der Verbesserung des Komforts immer größere Anforderungen gestellt. Gleichzeitig besteht das Erfordernis der Flugzeugbetreiber, einen hohen Kommunalitätsgrad zwischen den einzelnen Flugzeugtypen eines Flugzeugherstellers zu erreichen, um eine reduzierte Ersatzteilhaltung und vereinheitlichte Wartungsabläufe sicherzustellen. Auch ein wesentliches Kriterium für die Produktphilosophie eines Flugzeugherstellers ist es, ein einheitliches Erscheinungsbild - die sogenannte "Corporate Identity" anzustreben. Beispielsweise ist bei Airbus-Flugzeugen in der Single-Aisle-Familie (u.a. A320) eine nach oben hin aufweitende Kabinenkontur vorgesehen, wobei eine große Deckenfläche erreicht ist, die gleichzeitig für die Allgemeinbeleuchtung eine indirekte Beleuchtung erzielt. In der Flugzeugpassagierkabine in Twin-Aisle-Flugzeugen (u.a. A330/A340) wurde versucht, dieses Merkmal ebenfalls umzusetzen. In der Figur 1 sind im Querschnitt die Flugzeugtypen mit unterschiedlichen Rumpfdurchmessern ersichtlich sowie eine Übersicht über die verwendeten Verkleidungsteile der beiden Flugzeugtypen. Es ist ersichtlich, dass zur Realisierung des angestrebten einheitlichen Erscheinungsbildes jeweils für die Flugzeugkabinen mit unterschiedlichen Rumpfdurchmessern unterschiedliche Verkleidungsteile und Ausstattungsteile eingesetzt werden. Für Flugzeugkabinen mit kleinem Rumpfdurchmesser werden Verkleidungs- und Ausstattungsteile (Hatracks, Ceiling-Panels, Sidewall-Panels, Dado-Panels) vom Typ I eingesetzt und für Flugzeugkabinen mit großem Rumpfdurchmesser werden Bauteile Typ II eingesetzt. Die Bauteile des Typs I und II ähneln sich, sind jedoch nicht identisch. Daraus resultiert, dass bei Kabinenentwicklungen nach dem derzeitigen Stand der Technik im Einzelfall die Bauteilentwicklung separat vorgenommen wird und damit eine großer Kosten- und Zeitaufwand für Kabinenentwicklungen betrieben wird. Insbesondere bei einer Vergrößerung der Produktpalette, wie es derzeit vorgesehen ist mit dem Bau eines Verkehrsflugzeuges wie die A380 mit einem nochmals größeren Rumpfquerschnitt und zwei durchgängigen Passagierdecks, ist eine völlige Neuentwicklung der Kabine notwendig.
Aus EP-A-0 437 870 ist ein universell einsetzbares Seitenverkleidungsteil für Flugzeugpassagierkabinen beschrieben, welches typenübergreifend in unterschiedlichen Größen von Flugzeugen verwendbar ist. Es ist flexibel ausgebildet, um ein Anpassen an unterschiedliche Flugzeuggrößen durch ein "Aufbiegen" des Verkleidungsteiles zu erreichen. Eine Befestigung des Verkleidungsteiles erfolgt im oberen und unteren Bereich durch H-förmige Schienen, die an der Flugzeugstruktur befestigt sind und entsprechend der Größe der Flugzeugkabine das Verkleidungsteil halten (unter mehr oder weniger Spannung). Uninstalliert ist die größte Krümmung des Verkleidungsteiles vorgesehen. Für einen größeren Flugzeugdurchmesser (z.B. Flugzeugtyp Boeing 747) ist ein stärkeres Aufbiegen notwendig, für einen kleineren Flugzeugdurchmesser (z.B. Flugzeugtyp Boeing 737) ist nur ein geringes Aufbiegen notwendig. Die Flexibilität des Materials ist für Größenanpassungen wesentlich. Das Aufbiegen ist somit Bestandteil des Montageprinzips von Seitenverkleidungen in Passagierkabinen unterschiedlicher Größe und kann nicht unter Verwendung der üblichen Werkstoffe und Materialien für Flugzeugausstattungsteile realisiert werden.

Der Erfindung liegt daher die Aufgabe zugrunde, ein Verfahren der eingangs genannten Art derart auszubilden, dass Flugzeugverkleidungs- und Ausstattungsteile übergreifend für mehrere Flugzeugtypen einsetzbar sind und damit der Zeitaufwand für eine Kabinenentwicklung reduziert. Eine Vereinheitlichung in den Wartungsabläufen sowie eine reduzierte Ersatzteilhaltung soll ebenfalls ermöglicht werden.

Diese Aufgabe wird bei einem gattungsgemäßen Verfahren mit den im Patentanspruch 1 genannten Maßnahmen gelöst.

Vorteilhaft ergibt sich eine Reduzierung des notwendigen Aufwandes zur Neuentwicklung einer Passagierkabine, wenn ein neuer Flugzeugtyp entwickelt wird. Durch die Verwendung von typenübergreifenden Ausstattungsteilen können bereits in anderen Flugzeugtypen fertig entwickelte Verkleidungsteile genutzt werden und somit in größeren Stückzahlen produziert werden. Damit reduzieren sich die Stückkosten pro Teil, da unter anderem durch Erhöhung der Fertigungsstückzahlen die anteiligen Werkzeugkosten sinken. Insbesondere für die Flugzeugbetreiber ergibt sich eine reduzierte Ersatzteilhaltung sowie vereinheitlichte Wartungsabläufe, die den notwendigen Wartungsaufwand ebenfalls senken.

Alle wesentlichen Innenausstattungsteile können typenübergreifend für den Einbau in größenmäßig unterschiedlichen Passagierkabinen Anwendung finden. Ebenfalls sind aus der Gruppe der Gepäckablagen typenübergreifende Nutzungen der Bauteile möglich.

Weiterbildungen und vorteilhafte Ausgestaltungen sind in den Unteransprüchen 2 bis 4 angegeben sowie in der nachfolgenden Figurenbeschreibung dargestellt.

Durch eine Kombination von großflächigen Ausstattungsteilen gemäß des Anspruchs 2 - wie ein Seitenverkleidungsteil, welches einheitlich typenübergreifend einsetzbar ist - mit kleinflächigen spezifischen Ausstattungsteilen - wie ein Lichtabdeckungsteil - können für die unterschiedlichen Passagierkabinen spezifische Konstruktionselemente gestaltet werden oder andere spezifische Anforderungen erfüllt werden. Vereinheitlichte typenübergreifende Ausstattungsteile werden in Kombination mit typenspezifischen Ausstattungsteilen eingesetzt. Durch die Vereinheitlichung und damit durch Erhöhung der Bauteilstückzahl können Kostenreduzierungen erreicht werden und andererseits kann den spezifischen Anforderungen (z.B. Abmessungen) der verschiedenen Flugzeugpassagierkabinen Rechnung getragen werden,

Mit der Weiterbildung nach Anspruch 3 wird eine spezielles Bauteil vorgesehen, welches den Übergang von einem typenübergreifenden Seitenverkleidungsteil zu den jeweiligen Fenstern des Flugzeugrumpfes unterschiedlicher Größe ermöglicht.

Gemäß den Maßnahmen des Anspruchs 4 können mit einer geringen Anzahl von unterschiedlichen Deckenverkleidungsteilen die durch Größenunterschiede gekennzeichneten Passagierkabinen abgedeckt werden.

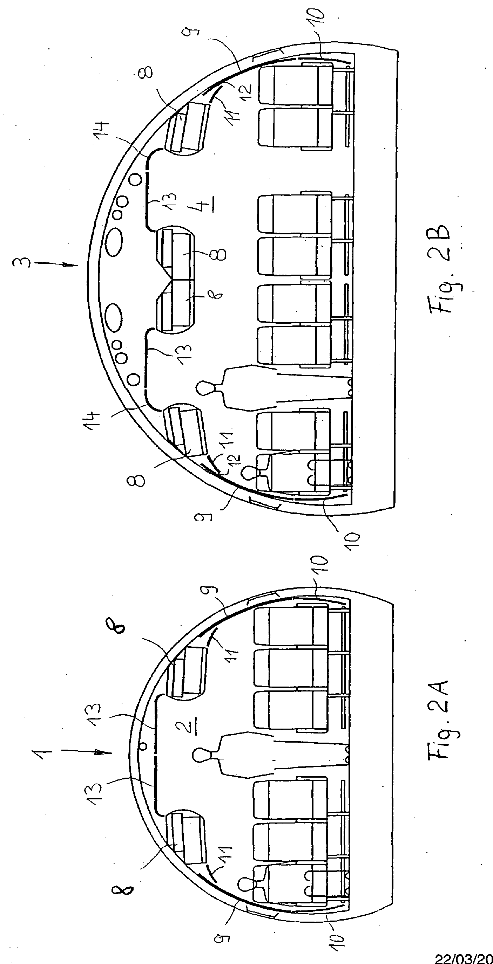

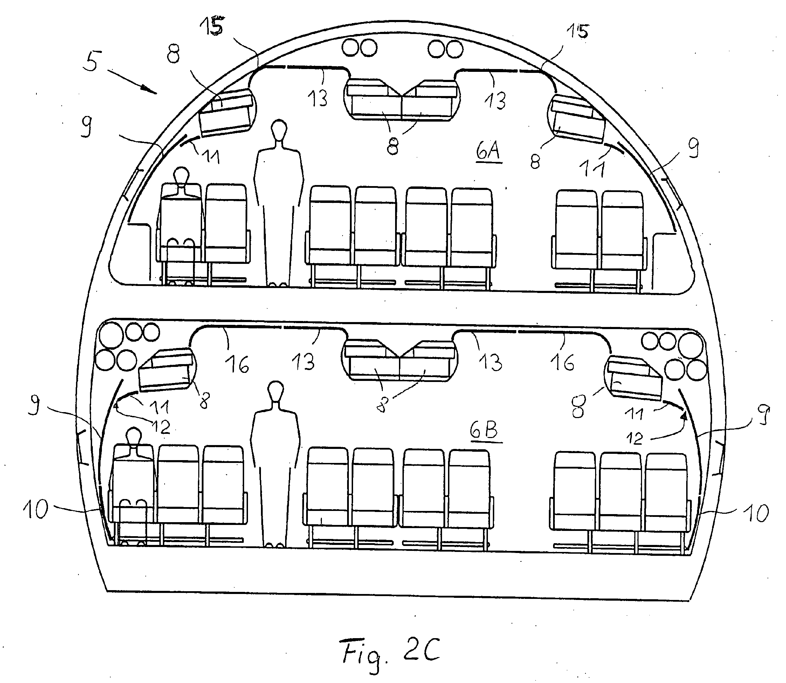

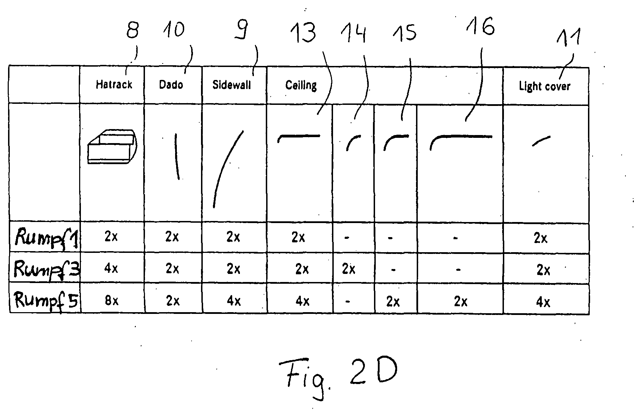

In der Zeichnung sind Ausführungsbeispiele des Passagierkabinenausstattungssystems dargestellt, welche nachstehend anhand der Figuren 2 bis 9 näher beschrieben werden. In der Figur 1 ist der nächstliegende Stand der Technik dargestellt. In den Figuren sind gleiche Bauteile mit gleichen Bezugszeichen versehen.

Es zeigt
- Fign. 1A bis 1C: zwei Flugzeugkabinen mit unterschiedlichen Rumpfdurchmessern im Querschnitt sowie eine Übersicht der wesentlichen Ausstattungs- und Verkleidungsteile, die nach dem derzeitigen Stand der Technik Verwendung finden,
- Fign. 2A bis 2D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer ersten Ausführungsform,
- Fign. 3A bis 3D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer zweiten Ausführungsform,
- Fign. 4A bis 4D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer dritten Ausführungsform,
- Fign. 5A bis 5D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer vierten Ausführungsform,
- Fign. 6A bis 6D: Querschnittsdarstellungen von drei Flugzeugkabinen mit unterschiedlichen Rumpfdurchmessern sowie eine Übersicht der wesentlichen verwendeten Ausstattungs- und Verkleidungsteile in einer fünften Ausführungsform,
- Fig. 7: ein Ausstattungsteil in Form eines Sidewall Panels in einer Ansicht von vorn,
- Fig. 8: einen Fenstertrichter in einer Ansicht von Form als Einzelheit und
- Fig. 9: einen Querschnitt durch eine Flugzeugpassagierkabine mit der Anordnung einer oberen Seitenwandverkleidung.

In Fig. 1A ist ein Querschnitt 1 eines Flugzeugrumpfes mit einem kleinen Rumpfdurchmesser dargestellt. Beispielsweise weist ein derartiges Flugzeug einen Rumpfdurchmesser von ungefähr 3,96 m auf und gehört bei den Airbus-Flugzeugen zur Single-Aisle-Familie (u.a. A320). Eine Flugzeugpassagierkabine 2 mit derzeit üblichen Ausstattungs- und Verkleidungsteilen ist im Flugzeugrumpf 1 vorgesehen. Eine Flugzeugpassagierkabine 4 für beispielsweise Twin-Aisle-Flugzeuge (u.a. A330/A340) ist in einem Flugzeugrumpf 3 mit einem Rumpfdurchmesser von ca. 5.64 m vorgesehen, der in Fig. 1B gezeigt ist. Eine Übersicht über die verwendeten Verkleidungsteile der beiden Flugzeugtypen ist in Fig. 1C ersichtlich.
Für Flugzeugkabinen 2 mit kleinerem Rumpfdurchmesser werden Verkleidungs-und Ausstattungsteile (Hatracks, Ceiling-Panels, Sidewall-Panels, Dado-Panels) vom Typ I eingesetzt und für Flugzeugkabinen mit größerem Rumpfdurchmesser werden Bauteile des Typs II (Hatracks, Ceiling-Panels, Sidewall-Panels, Dado-Panels) bzw. des Typs III (Mittelhatracks) eingesetzt. Eine Ähnlichkeit der Bauteile wird angestrebt, um ein einheitliches Erscheinungsbild der Produktfamille eines Herstellers zu erreichen. Jedoch werden keine identischen Bauteile in beiden Kabinen verwendet. Fig. 1 beschreibt den Stand der Technik, von dem die Erfindung ausgeht.

In Fign. 2A bis 2D ist eine erste Ausführungsform des Passagierkabinenausstattungssystems dargestellt. Neben den in Fign. 2A und 2B gezeigten Rumpfquerschnitten 1 und 3 ist es auch für eine Flugzeugkabine 6 mit zwei durchgängigen Passagierdecks 6A und 6B und einem ovalen Rumpfquerschnitt 5 erfindungsgemäß vorgesehen, Ausstattungsteile und Verkleidungsteile typenübergreifend einzusetzen. Die Flugzeugkabine 6 des größten Flugzeugrumpfes 5 ist in der Figur 2C dargestellt. Bei der Realisierung eines Bausteinkonzeptes mit identischen Teilen kann bei den drei beispielhaft gezeigten Rumpfquerschnitten eine Flugzeugkabinenentwicklung effektiv gestaltet werden und vorteilhaft die Teilevielfalt reduziert werden. Damit ergeben sich größere Stückzahlen der verwendeten Teile, was wiederum positive Auswirkungen auf die Herstell- und Fertigungskosten der Teile hat. So ist beispielsweise bei der Anwendung von einem einzigen Typ des Hatracks 8 für die Flugzeugkabinen aller Rumpfquerschnitte 1, 3 und 5 eine siebenfache Erhöhung der Teileanzahl zu erwarten. In einer tabellarischen Übersicht in Fig. 2D ist dargestellt, welche weiteren Bauteile in welcher Anzahl für die unterschiedlichen Kabinengrößen der Passagierkabinen 2, 4 und 6 zur Verfügung stehen. Bei den Seitenverkleidungsteilen (Sidewall-Panels) 9 und Fußraumverkleidungsteilen (Dado-Panels) 10 sind aufgrund der unterschiedlichen Rumpfdurchmesser auch unterschiedliche Krümmungsradien und Umfangsstrecken zu berücksichtigen. In einer bevorzugten Ausgestaltung bezieht sich der Krümmungsradius des Seitenverkleidungsteiles 9 auf den nahezu kreisförmigen, etwa 4000 mm großen Rumpfquerschnitt des Rumpfes 1. Die Anwendung des gleichen Seitenverkleidungsteiles 9 auf den Rumpfdurchmesser des Rumpfes 3 von bevorzugt 5640 mm ergibt einen minimalen Verlustraum, der jedoch im Fußraum für den Passagier kaum wahrnehmbar ist und durch ein Fußraumverkleidungsteil 10 überbrückt wird. Die Anwendung des Seitenverkleidungsteils 9 in der Passagierkabine 6 des Flugzeuges mit ovalem Querschnitt 5 ist ebenfalls möglich. In Fig. 2C ist ersichtlich, dass im oberen Passagierdeck 6A die Montage der Seitenverkleidung 9 nur geringe Verlusträume ergibt, da der Radius dieses Bereichs dem des Flugzeugrumpfes 3 etwa entspricht. Im unteren Passagierdeck 6B sind aufgrund des größten Krümmungsradius des Flugzeugrumpfes 5 in diesem Bereich die Abweichungen am größten und in einer bevorzugten Ausgestaltung werden die Verlusträume aufgrund der Krümmung möglichst im oberen Bereich plaziert, um im Ellbogen- und Schulterbereich die größte Breite der Kabine 6 zu erreichen. Da bei der Anwendung eines Standard-Seitenverkleidungsteils 9 die Höhe dieser Verkleidung vorgegeben ist und in den Kabinen 1, 3 und 5 die zu verkleidenden Kabinen unterschiedliche Seitenhöhen aufweisen, werden zum Ausgleich bzw. zum Verdecken der überschüssigen Höhe Seitenlichtabdeckungen (Lateral Light Cover) 11 angeordnet. Mit der Verwendung dieser Abdeckungen 11 können in einfacher Art die Übergangsbereiche flexibel gestaltet und unaufwendig abgedeckt werden. Entstehende Spaltbereiche 12 zwischen den Seitenverkleidungen 9 und der Seitenlichtabdeckung 11 können in einer bevorzugten Weiterbildung als Klimaluftauslässe genutzt werden.

Für den Deckenbereich der Passagierkabinen 2, 4 und 6 sind Deckenverkleidungselemente 13, 14, 15 und 16 vorgesehen, die entsprechend miteinander kombiniert werden können. Zwei Deckenverkleidungselemente 13 sind für den kleinen Rumpf 1 vorgesehen (Fig. 2A), wobei diese beiden Elemente spiegelbildlich ausgebildet sind und eine montagefreundliche, zweiteilige Decke bilden. Für den Rumpf 3 (Fig. 2B) mit zwei Gängen können ebenfalls zwei Deckenverkleidungsteile 13 diesen Typs I verwendet werden. Im Deckenbereich der äußeren Gepäckablagen 8 ist jedoch jeweils eine spezifische Deckenverkleidung 14 vom Typ II vorgesehen. Für den Rumpf 5 (Fig. 2C) mit den zwei Passagierdecks 6A und 6B sind Deckenverkleidungen 13 vom Typ I viermal vorgesehen. Jeweils ausgehend von der mittleren Gepäckablage 8 werden die Deckenverkleidungen 13 im Oberdeck 6A durch zwei Deckenverkleidungen 15 vom Typ III ergänzt sowie im Hauptdeck 6B durch Deckenverkleidungen 16 vom Typ IV.

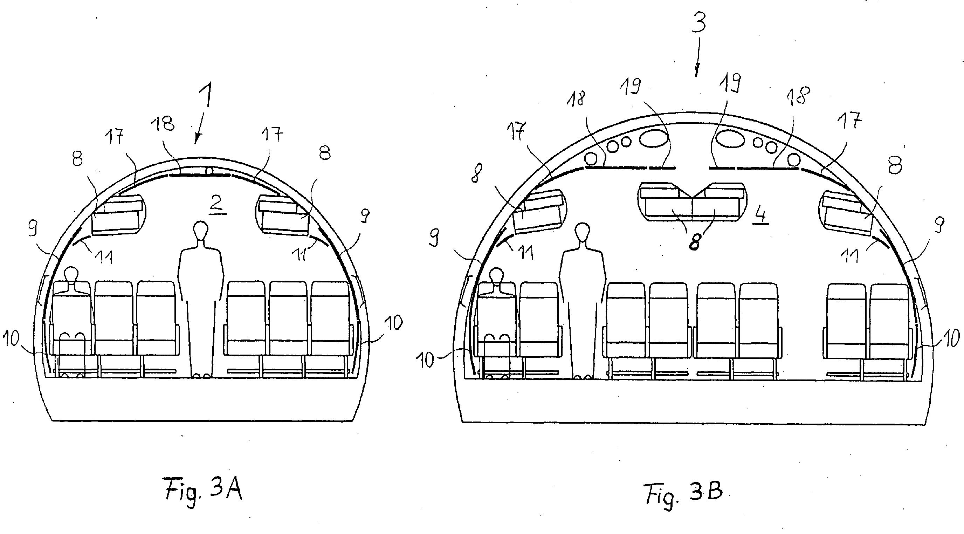

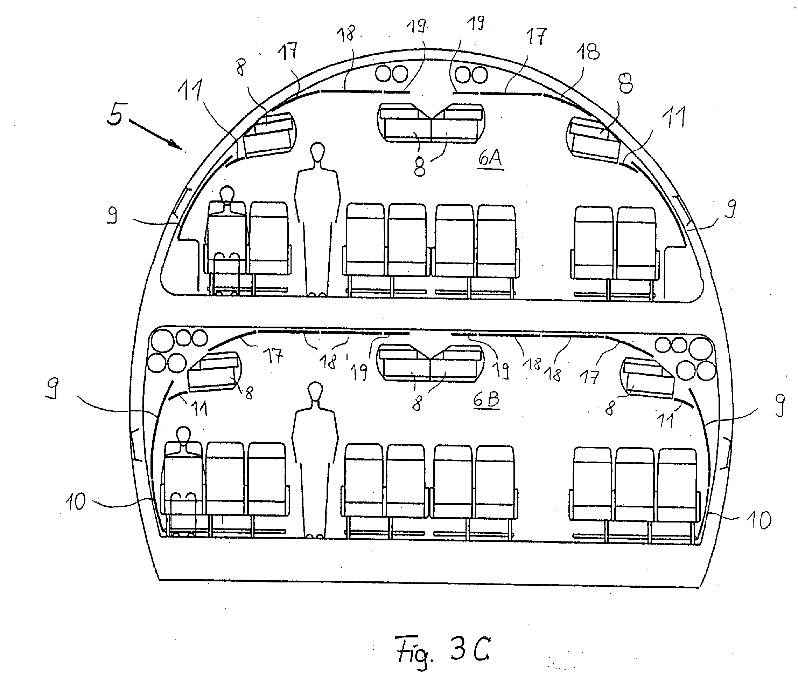

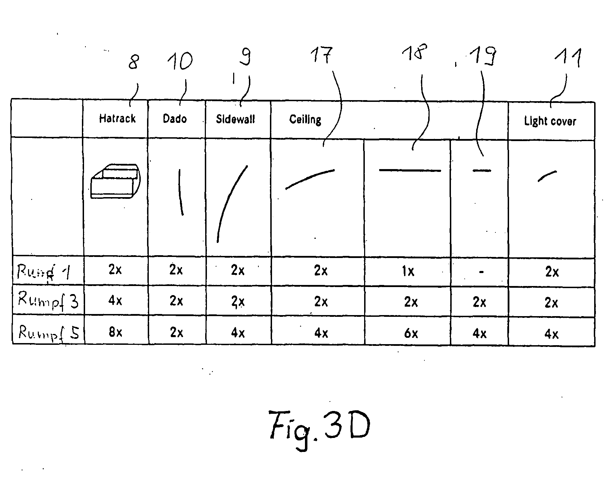

In den Fign. 3A bis 3D ist eine zweite Ausführungsform des Passagierkabinenausstattungssystems dargestellt. In dieser Ausführungsform werden Gepäckablagen (Hatracks) 8, Seitenlichtabdeckungen (Lateral Light Cover) 11, Seitenverkleidungen (Sidewall Panel) 9 und Fußraumverkleidungen (Dado Panel) 10 prinzipgleich zur vorangegangenen Ausführungsform genutzt. Die Anzahl der verschiedenen Typen der Deckenverkleidungen konnte von vier verschiedenen Typen der ersten Ausführungsform (Deckenverkleidungen 13 bis 16 in Fig. 2) auf drei verschiedene Typen von Deckenverkleidungen 17, 18 und 19 reduziert werden. Damit wird die Stückzahl der jeweils benötigten Deckenverkleidungen weiter erhöht, was den Fertigungsaufwand (z. B. anteilige Werkzeugkosten) sinken lässt.
Die Decke der Passagierkabine 2 vom Flugzeug mit dem kleinsten Rumpfdurchmesser 1 ist in dieser zweiten Ausführungsform dreiteilig ausgeführt; sie besteht aus jeweils zwei Deckenverkleidungselementen 17 und einem Deckenverkleidungselement 18 (siehe Fig. 3A).
Die Decke der Passagierkabine 4 mit zwei Gängen zeigt eine sechsteilige Ausführung. Jeweils ein gekrümmtes Deckenverkleidungselement 17 deckt den äußeren Deckenbereich der Passagierkabine 4 ab. Die mittleren Deckenbereiche werden durch das nahezu planare oder nur geringfügig gekrümmte Deckenverkleidungselement 18 abgedeckt. Daran schließt sich in Richtung der mittleren Gepäckablagen 8 ein kleineres, ebenfalls nahezu planares Deckenverkleidungselement 19 an (siehe Fig. 3B).
Die Passagierkabine des Flugzeuges 5 (siehe Fig. 3C) weist im Oberdeck 6A eine der Passagierkabine 4 gleichende Anordnung von Deckenverkleidungselementen 17, 18, 19 auf. Beim Mitteldeck 6B wird das Deckenverkleidungselement 17 jeweils im äußeren Deckenbereich angeordnet. Die mittleren Deckenbereiche werden durch zwei nahezu planare oder nur geringfügig gekrümmte Deckenverkleidungselemente 18 abgedeckt. Daran schließt sich in Richtung der mittleren Gepäckablagen 8 jeweils ein kleineres, ebenfalls nahezu planares Deckenverkleidungselement 19 an. Aufgrund der üblicherweise symmetrischen Anordnung von den Verkleidungselementen in Bezug auf die Flugzeuglängsachse ergibt sich somit ein Bedarf für das Flugzeug 5 mit ovalförmigem Querschnitt von insgesamt vier Deckenverkleidungselementen 17, sechs Deckenverkleidungselementen 18 und vier Deckenverkleidungselementen 19. Die verwendeten Verkleidungs- und Ausstattungsteile gemäß der zweiten Ausführungsform für die Flugzeuge 1, 3 und 5 mit verschiedenen Rumpfdurchmessern sind in einer Übersicht in Fig. 3D zusammenfassend dargestellt.

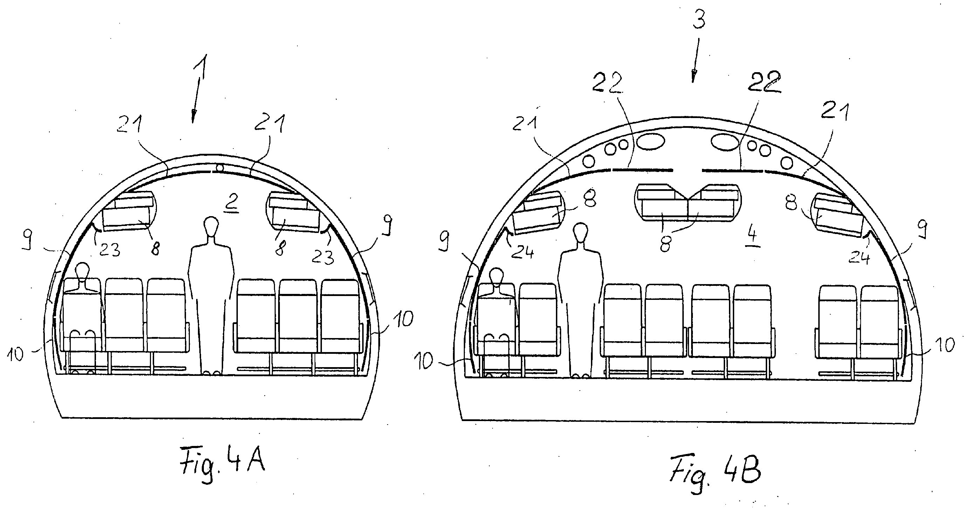

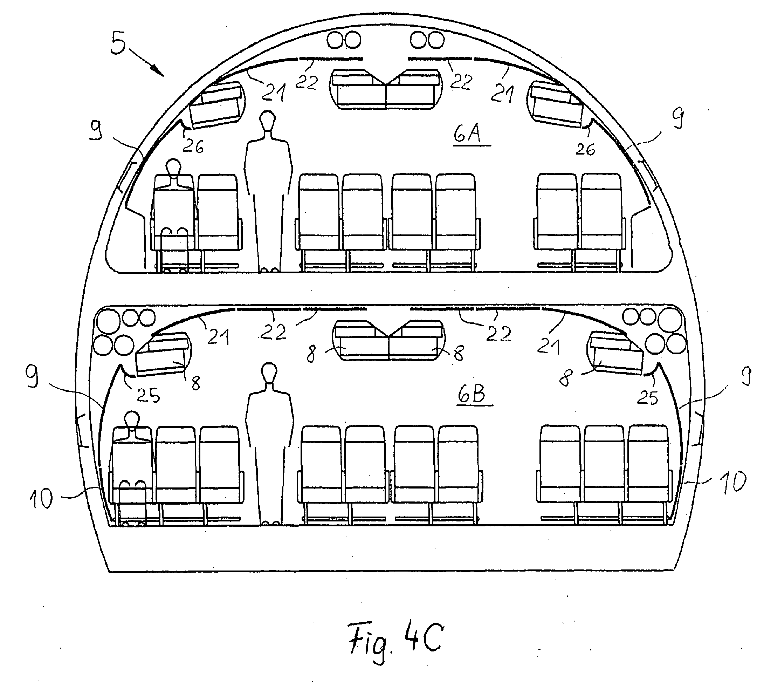

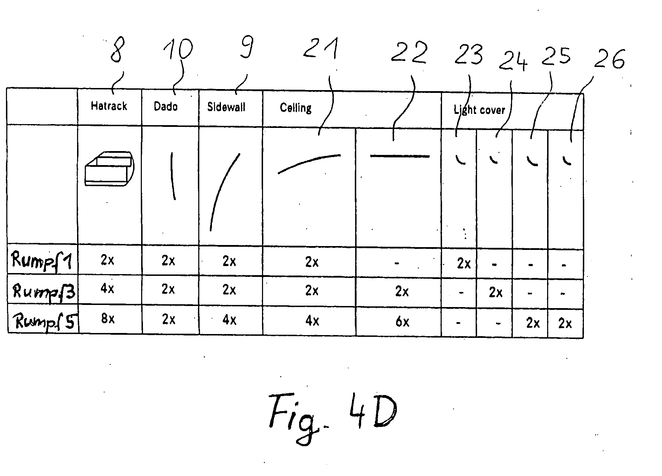

In einer dritten Ausführungsform des Passagierkabinenausstattungssystems, die in den Fign. 4A bis 4D dargestellt ist, konnte eine weitere Reduzierung der Typenvielfalt der Deckenverkleidungsteile realisiert werden. In dieser Ausführungsform werden Gepäckablagen (Hatracks) 8, Seitenverkleidungen (Sidewall Panel) 9 und Fußraumverkleidungen (Dado Panel) 10 prinzipgleich zu den vorangegangenen Ausführungsformen genutzt. Einzig bei den kleinflächigen Lichtabdeckungen (Light Cover) wurden passgenaue Typen 23, 24, 25, 26 vorgesehen, was den Vorteil bietet, dass die für die vorangegangenen Ausführungsformen vorgesehene Überlängenkaschierung entfallen kann und damit konstruktive Möglichkeiten eröffnet werden, typspezifische Konstruktionselemente vorzusehen, beispielsweise Klimaluftauslässe in den Lichtabdeckungen bzw. in dem Bereich dieser Abdeckungen. Die Erhöhung der Typenvielfalt bei kleineren Bauteilen ermöglicht, die Anzahl der verschiedenen Typen der Deckenverkleidungen auf zwei verschiedene Typen 21 und 22 zu reduzieren. Da insbesondere bei den großflächigen Bauteilen 21 und 22 durch Erhöhung der Stückzahlen der Fertigungsaufwand je Stück (anteilige Werkzeugkosten) verringert werden kann, bedeutet die Erhöhung der Typenanzahl der kleinflächigen Lichtabdeckungen keine Erhöhung des Gesamtaufwandes.
Die Decke der Passagierkabine 2 gemäß Fig. 4A vom Flugzeug mit dem kleinsten Rumpfdurchmesser 1 ist in dieser dritten Ausführungsform zweiteilig ausgeführt; sie besteht aus zwei symmetrisch angeordneten, gekrümmten Deckenverkleidungselementen 21.
Die Decke der Passagierkabine 4 gemäß Fig. 4B mit zwei Gängen zeigt eine vierteilige Ausführung. Jeweils ein gekrümmtes Deckenverkleidungselement 21 deckt den äußeren Deckenbereich der Passagierkabine 4 ab. Die mittleren Deckenbereiche werden durch das nahezu planare oder nur geringfügig gekrümmte Deckenverkleidungselement 22 abgedeckt, welches ausreichend lang ist, um bis zu den mittleren Gepäckablagen die Decke zu verkleiden.
Die Passagierkabine des Flugzeuges 5 gemäß Fig. 4C weist im Oberdeck 6A eine der Passagierkabine 4 gleichende Anordnung von Deckenverkleidungselementen 21 und 22 auf. Beim Mitteldeck 6B wird das Deckenverkleidungselement 21 jeweils im äußeren Deckenbereich angeordnet. Die mittleren Deckenbereiche bis zum Bereich der mittleren Gepäckablagen 8 werden durch zwei nahezu planare oder nur geringfügig gekrümmte Deckenverkleidungselemente 22 abgedeckt. Aufgrund der üblicherweise symmetrischen Anordnung von den Verkleidungselementen in Bezug auf die Flugzeuglängsachse ergibt sich somit ein Bedarf für das Flugzeug 5 mit ovalförmigem Querschnitt von insgesamt vier Deckenverkleidungselementen 21 und sechs Deckenverkleidungselementen 22. Die verwendeten Verkleidungs- und Ausstattungsteile gemäß der dritten Ausführungsform für die Flugzeuge 1, 3 und 5 mit verschiedenen Rumpfdurchmessern sind in einer Übersicht in der Fig. 4D zusammenfassend dargestellt.

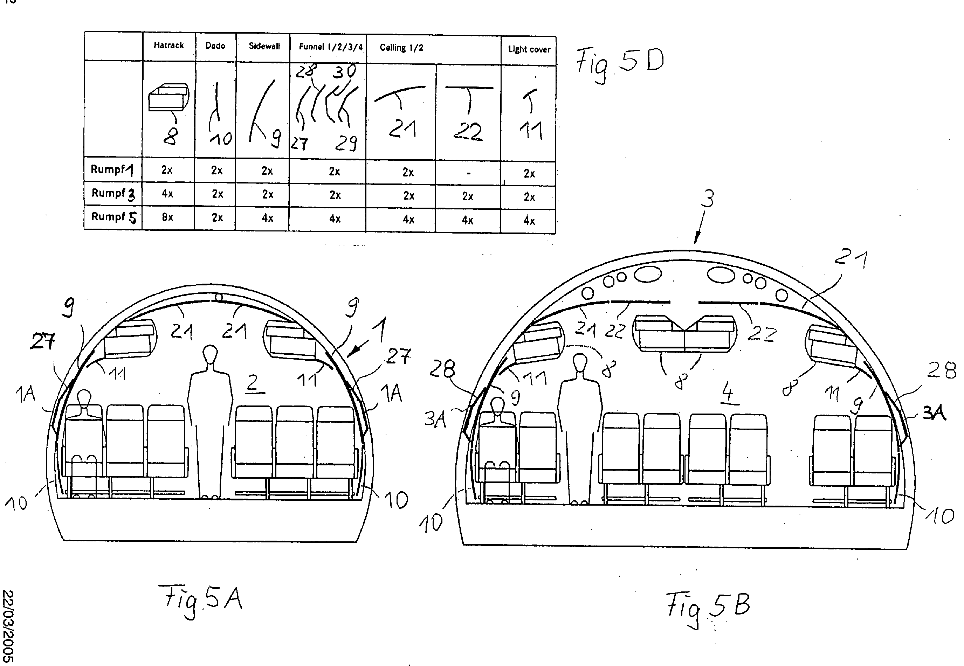

Eine vierte Ausführungsform ist in den Fign. 5A bis 5D gezeigt. Die in den Fign. 5A bis 5C gezeigten Rumpfquerschnitte 1, 3 und 5 beinhalten eine Kombination von Ausstattungs- und Verkleidungsteilen der zweiten und dritten Ausführungsform, wobei mit dieser Kombination eine geräumige Gesamtanmutung der Passagierkabine bei größtmöglicher Wirtschaftlichkeit erreicht ist. In dieser Ausführungsform wurde berücksichtigt, dass aufgrund der unterschiedlichen Rumpfgeometrien der Flugzeugrümpfe 1, 3 und 5 ein Übergang von den Fenstern 1A, 3A bzw. 5A im Flugzeugrumpf 1, 3 bzw. 5 zum jeweiligen Seitenwandverkleidungsteil 9 unterschiedliche Anpassungen notwendig macht. Diese Anpassungen werden mittels Fenstertrichter 27 bis 30 realisiert. In Fig. 5D ist in einer Übersicht dargestellt, welche Verkleidungs- und Ausstattungsteile und in welcher Anzahl für die vierte Ausführungsform notwendig sind.
In dieser Ausführungsform werden Gepäckablagen (Hatracks) 8, Seitenverkleidungen (Sidewall Panel) 9 und Fußraumverkleidungen (Dado Panel) 10 prinzipgleich zu den vorangegangenen Ausführungsformen genutzt. Die Lichtabdeckung 11 entspricht der in der zweiten Ausführungsform erwähnten Form.

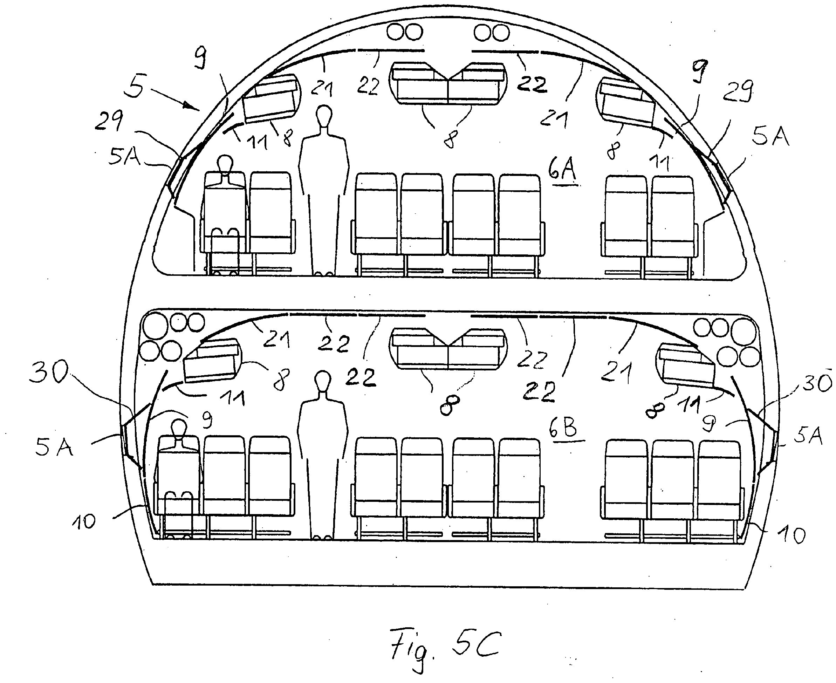

Die Decke der Passagierkabine 2 gemäß Fig. 5A vom Flugzeug mit dem kleinsten Rumpfdurchmesser 1 ist in dieser vierten Ausführungsform zweiteilig ausgeführt; sie besteht aus zwei symmetrisch angeordneten, gekrümmten Deckenverkleidungselementen 21. Die Decke der Passagierkabine 4 gemäß Fig. 5B mit zwei Gängen zeigt eine vierteilige Ausführung. Jeweils ein gekrümmtes Deckenverkleidungselement 21 deckt den äußeren Deckenbereich der Passagierkabine 4 ab. Die mittleren Deckenbereiche werden durch das nahezu planare oder nur geringfügig gekrümmte Deckenverkleidungselement 22 abgedeckt, welches ausreichend lang ist, um bis zu den mittleren Gepäckablagen die Decke zu verkleiden. Die Passagierkabine des Flugzeuges 5 gemäß Fig. 5C weist im Oberdeck 6A eine der Passagierkabine 4 gleichende Deckenverkleidungsanordnung 21 und 22 auf. Beim Mitteldeck 6B wird das Deckenverkleidungselement 21 jeweils im äußeren Deckenbereich angeordnet. Die mittleren Deckenbereiche bis zum Bereich der mittleren Gepäckablagen 8 werden durch zwei nahezu planare oder nur geringfügig gekrümmte Deckenverkleidungselemente 22 abgedeckt. Damit gleicht die Deckenanordnung dieser Ausführungsform der Deckenanordnung der dritten Ausführungsform. Die Fenstertrichter 27 bis 30 sind angepasst an die zu kaschierende Bautiefe zwischen dem entsprechenden Seitenverkleidungsteil 9 und dem Fenster 1A, 3A bzw. 5A ausgebildet und weisen unterschiedliche Trichtertiefen auf. In Fig. 5A ist der Fenstertrichter 27 mit der geringsten Trichtertiefe dargestellt. Da das Verkleidungsteil 9 bevorzugt dem Rumpfdurchmesser dieses Flugzeugrumpfes 1 angepasst ist, ist in diesem Fall die geringste Bautiefe zu kaschieren. In Fig. 5B ist der Fenstertrichter 28 mit etwas größerer Trichtertiefe sowie in Fig. 5C die Fenstertrichter 29 und 30 für den größten Rumpfdurchmesser 5 ersichtlich.

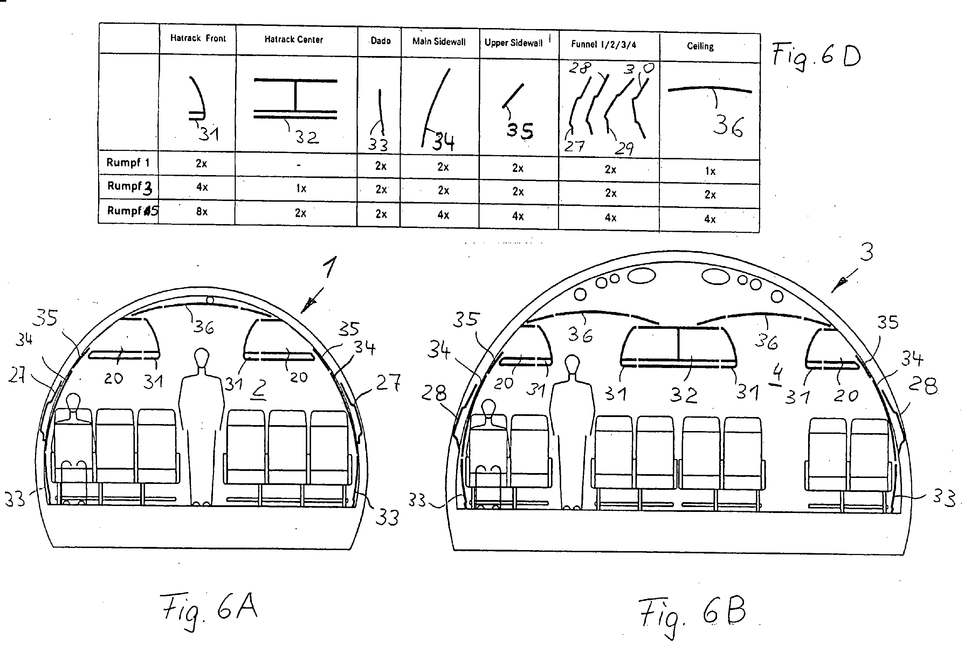

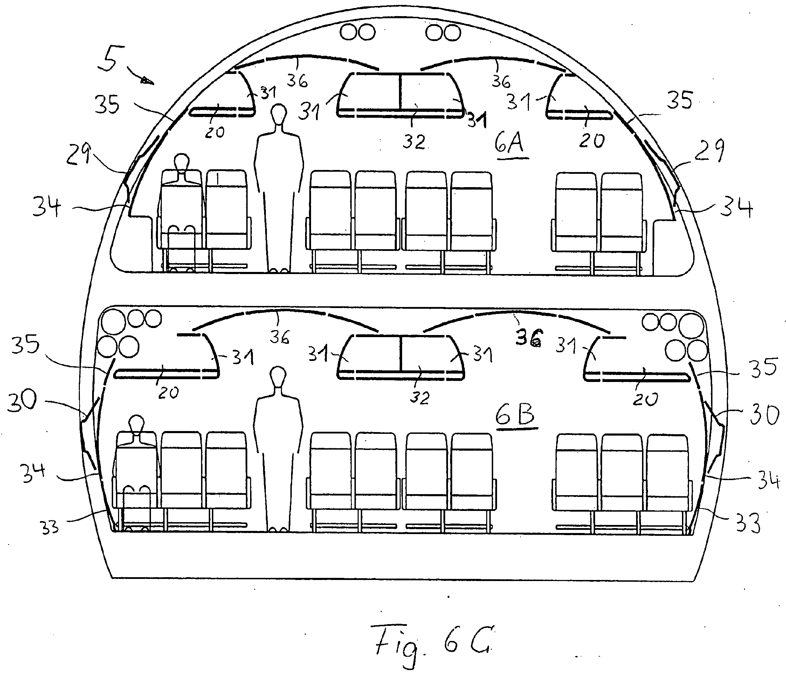

In den Fign. 6A bis 6D ist eine fünfte Ausführungsform mit einer Anwendung von modularen Kabinenbauteilen gezeigt. Diese Ausführungsform ist gekennzeichnet durch die Modularität einzelner Verkleidungselemente. So ist beispielsweise das Seitenverkleidungsteil aus einem Hauptseitenverkleidungsteil 34 und einem oberen Seitenverkleidungsteil 35 gebildet. Die Gepäckablagen werden gebildet aus Gepäckablagenvorderteilen 31, welche für die gesamten Flugzeugtypen (beispielhaft 1, 3 und 5) eingesetzt werden können, sowie typenübergreifenden Gepäckablagenmittelteilen 32 für die mittleren Gepäckablagen der Passagierkabinen 4 und 6. Das Gepäckablagenmittelteil 32 weist zwei entgegengesetzt geöffnete Gepäckfächer auf, wobei im Öffnungsbereich zu den Gepäckfächern die Gepäckablagenvorderteile 31 vorgesehen sind. Es können mehrere identische Gepäckablagenvorderteile 31 an Gepäckablagenmittelteilen 32 und/oder an seitlichen Gepäckablagenteilen 20 innerhalb einer Passagierkabine 1, 3 oder 5 angeordnet sein. Ein einheitliches Erscheinungsbild kann mit einer derartigen Nutzung der Gepäckablagenvorderteile 31 erzielt werden.
Auch für die Deckenverkleidung in dieser fünften Ausführungsform ist eine Kombination von typenübergreifenden Bauteilen und der Passagierkabine angepassten spezifischen Bauteilen vorgesehen. Ein typenübergreifendes (standardisiertes) Deckenverkleidungsteil 36 ist in der Flugzeugkabine 2 einmal, in der Flugzeugkabine 4 zweimal und in der Passagierkabine 6 viermal vorgesehen.

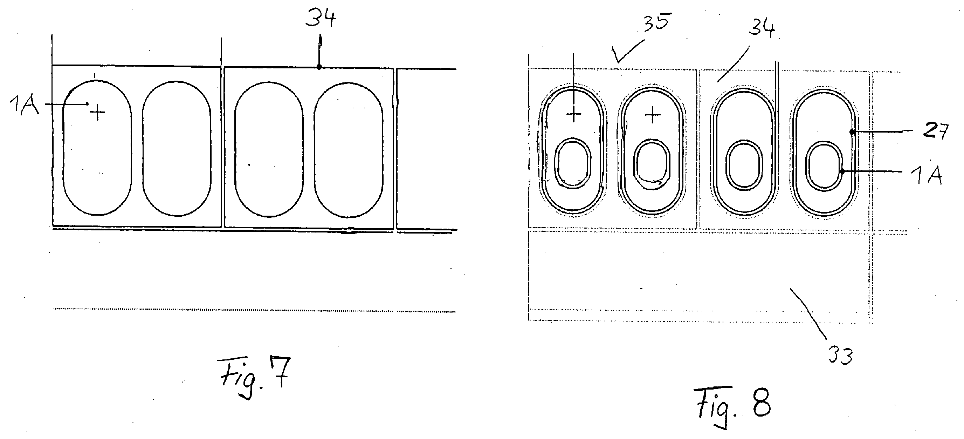

In den Fign. 7 bis 9 sind einzelne Ausstattungsteile als Einzelheit dargestellt.

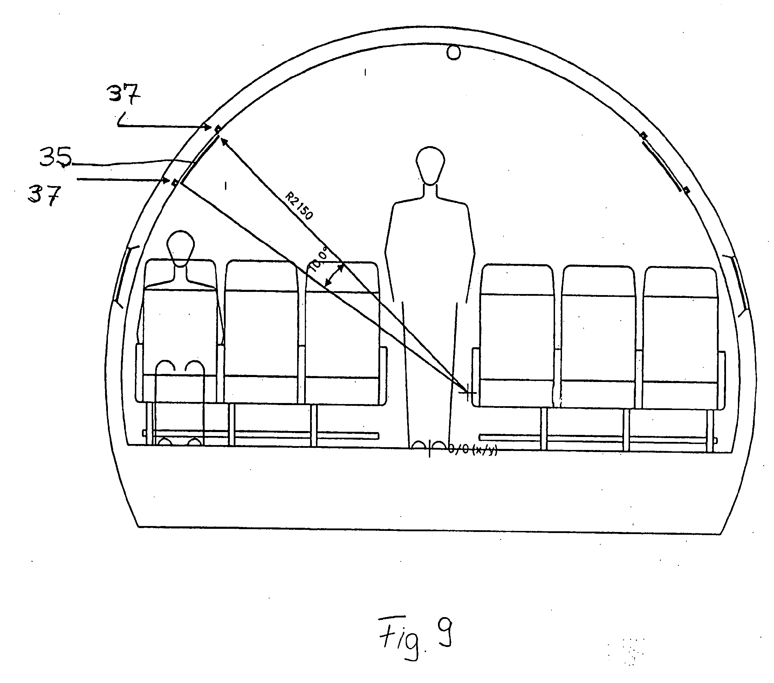

Die Fig. 7 zeigt ein Seitenverkleidungsteil, beispielsweise das Hauptseitenverkleidungsteil 34 in einer Ansicht von vorn. Das Seitenverkleidungsteil 34 ist mit einer Öffnung für das Fenster 1A, 3A bzw. 5A, vorzugsweise angepasst an den Fenstertrichter 27, 28, 29 oder 30 (siehe Fig. 8) vorgesehen. Aus Einbau-und Wartungsgründen ist das Seitenverkleidungsteil 34 in der Breite vorzugsweise auf maximal zwei Spantfelder (umfassend zwei Fenster in der gezeigten Ausführung) begrenzt. Oberhalb des Hauptseitenverkleidungsteiles 34 ist entsprechend der fünften Ausführungsform das obere Seitenverkleidungsteil 35 vorgesehen und nach unten schließt die Fußraumverkleidung 33 an. Eine Möglichkeit des Einbaus und schnellen Wechsels eines derartigen oberen Seitenverkleidungsteils 35 ist mittels einer Anordnung von Systemschienen 37 möglich, wie es in Fig. 9 gezeigt ist. Die Systemschienen 37 können aber auch als Träger für Lichtobjekte, Werbeflächen oder temporäre Dekorflächen dienen und so im Bereich des oberen Seitenverkleidungsteiles 35 individuelle Gestaltungen ermöglichen.

Die bisher beschriebenen Ausführungsformen sind beispielhafte Varianten, die die Grundidee - typenübergreifend Bauteile in verschiedenen Passagierkabinen einzusetzen - näher erläutern. Es gibt einerseits die Möglichkeit, mit dem modularen Zusammensetzen von typenübergreifenden, möglicherweise standardisierten Bauteilen ein Höchstmaß an Wirtschaftlichkeit mit einer Verringerung der Bauteilvielfalt zu erreichen oder andererseits durch Kombination von spezifischen, der Rumpfgröße angepassten Bauteilen mit einigen typenübergreifenden Bauteilen zu kombinieren, um u.a. den spezifischen Größenverhältnissen der einzelnen Passagierkabinen besser Rechnung zu tragen. Darüber hinaus ist es vorgesehen - wie beispielsweise in der in den Fign. 6A bis 6D gezeigten fünften Ausführungsform - Bauteile selbst modular zu gestalten, um eine Vereinheitlichung und damit durch eine Erhöhung der Stückzahl eine Kostensenkung zu erreichen und andererseits den spezifischen Anforderungen (z.B. Abmessungen) der verschiedenen Flugzeugpassagierkabinen Rechnung zu tragen. Wie in Fig. 9 gezeigt, können mit dem Verwenden des modularen oberen Seitenverkleidungsteiles 35 und Systemschienen 37 Möglichkeiten zur individuellen Anpassung an Kundenwünsche vorgesehen werden. So sind auf einfache Weise airlinespezifische Modifikationen realisierbar, beispielsweise eine Veränderung der Klasseneinteilung, vorzugsweise durch Veränderung des oberen Seitenverkleidungsteiles 35 im Dekor, oder eine Airline kann ihr individuelles Zeichen bzw. ihren Stil durch Gestaltung dieses Seitenverkleidungsteiles 35 zum Ausdruck bringen, ohne den gesamten Bereich der Passagierkabine neu zu gestalten bzw. eine Änderung einer Vielzahl von Verkleidungsteilen durchführen zu müssen.

### Bezugszeichen

- 1 -: Flugzeugrumpf mit kleinem Rumpfdurchmesser
- 1A -: Fenster für Flugzeug gemäß 1
- 2 -: Passagierkabine für Flugzeug gemäß 1
- 3 -: Flugzeugrumpf mit größerem Rumpfdurchmesser
- 3A -: Fenster für Flugzeug gemäß 3
- 4 -: Passagierkabine für Flugzeug gemäß 3
- 5 -: Flugzeugrumpf mit ovalem Rumpf
- 5A -: Fenster für Flugzeug gemäß 5
- 6 -: Passagierkabine für Flugzeug gemäß 5
- 6A -: Oberes Deck
- 6B -: Mittleres Deck
- 8 -: Gepäckablagen (Hatrack)
- 9 -: Seitenverkleidungen (Sidewall-Panels)
- 10 -: Fußraumverkleidungen (Dado-Panels)
- 11 -: Seitenlichtabdeckungen (Lateral Light Cover)
- 12 -: Spaltbereich/Übergangsbereich
- 13-16 -: Deckenverkleidungselemente in erster Ausführungsform
- 17-19 -: Deckenverkleidungselemente in zweiter Ausführungsform
- 20 -: seitliche Gepäckablagenteile
- 21, 22 -: Deckenverkleidungselemente in dritter Ausführungsform
- 23 - 26 -: Lichtabdeckungen (Light Cover) für dritte Ausführungsform
- 27 - 30 -: Fenstertrichter für vierte Ausführungsform
- 31 -: Gepäckablagenvorderteil für fünfte Ausführungsform
- 32 -: Gepäckablagenmittelteil für fünfte Ausführungsform
- 33 -: Fußraumabdeckung "
- 34 -: Hauptseitenverkleidungsteil "
- 35 -: oberes Seitenverkleidungsteil "
- 36 -: Deckenverkleidungsteil "
- 37 -: Systemschienen

## Patentansprüche

1. Verfahren zum Einbau von typenübergreifenden Innenausstattungsbauteilen in Passagierkabinen (2, 4, 6) von Verkehrsflugzeugen verschiedener Rumpfquerschnittsgrößen (1, 3, 5), wobei mindestens ein Innenausstattungsbauteil aus einer Gruppe von identischen typenübergreifenden Verkleidungsteilen,
umfassend Sidewall-Panels (9), Hauptseitenverkleidungsteile (34), obere Seitenverkleidungsteile (35), als Fußraumabdeckung (10, 33) ausgebildete Seitenverkleidungsteile, als Ceiling Panel (13-16; 17 -19; 21, 22, 36) und als Abdeckungsteil (11; 21, 22) ausgebildete Deckenverkleidungsteile(9, 10 13, 16; 17 - 19; 21, 22; 33, 34, 35, 36) mit
zumindest einem weiteren, der Rumpfquerschnittsgröße (1, 3, 5) der auszustattenden Passagierkabine (2, 4, 6) spezifisch angepassten Verkleidungsteil (14, 15, 23 - 26. 27 - 30) zur Bildung einer Passagierkabinenausstattung zusammengesetzt wird wobei durch das spezifisch angepasste Verkeidungsteil den spezifischen Grössen verhältnissen der verschiedenen Flugzeugpassagierkabinen Rechnung getragen wird.

2. Verfahren nach Anspruch 1, **dadurch gekennzeichnet, dass** als ausgewähltes Innenausstattungsbauteil ein typenübergreifendes Seitenverkleidungsteil (9) eingesetzt wird, welches mit spezifischen Lichtabdeckungsteilen (23 - 26) entsprechend der Rumpfquerschnittsgröße (1, 3, 5) der Passagierkabine (2, 4, 6) kombiniert wird.

3. Verfahren nach Anspruch 1, **dadurch gekennzeichnet, dass** als ausgewähltes Innenausstattungsbauteil ein typenübergreifendes Seitenverkleidungsteil (9) eingesetzt wird, welches mit spezifischen Fenstertrichtern (27 - 30) entsprechend der Rumpfquerschnittsgröße (1, 3, 5) der Passagierkabine (2, 4, 6) kombiniert wird.

4. Verfahren nach Anspruch 1, **dadurch gekennzeichnet, dass** als ausgewähltes Innenausstattungsbauteil ein typenübergreifendes Deckenverkleidungsteil (13; 17, 18; 21) eingesetzt wird, welches mit Deckenverkleidungsteilen (14, 15, 16; 19; 22) entsprechend der Rumpfquerschnittsgröße (1, 3, 6) der Passagierkabine (2, 4, 6) kombiniert wird.

## Claims

1. A method for installing generic interior fitting components in passenger cabins (2, 4, 6) of commercial aircraft of various fuselage diameter sizes (1, 3, 5), wherein at least one interior fitting component is composed of a group of identical generic panels that comprise sidewall panels (9), main side cover panels (34), top side cover panels (35), side cover panels designed as floor space cover (10, 33), ceiling cover panels (9, 10; 13, 16; 17-19; 21, 22; 33, 34, 35, 36) that are designed as ceiling panel (13-16; 17-19; 21, 22, 36) and as cover panel (11; 21, 22), with at least one further cover panel (14, 15, 23-26, 27-30) that specifically matches the fuselage diameter size (1, 3, 5) of the passenger cabin (2, 4, 6) to be fitted out, for forming passenger cabin furnishings, wherein by means of the specifically matching cover panel the specific ratio of dimensions of the various aircraft passenger cabins is taken into account.

2. The method of claim 1, **characterised in that** a generic side cover panel (9) is used as a selected interior fitting component, which side cover panel (9) is combined with specific light cover panels (23-26) corresponding to the fuselage diameter size (1, 3, 5) of the passenger cabin (2, 4, 6).

3. The method of claim 1, **characterised in that** a generic side cover panel (9) is used as a selected interior fitting component, which side cover panel (9) is combined with specific window funnels (27-30) corresponding to the fuselage diameter size (1, 3, 5) of the passenger cabin (2, 4, 6).

4. The method of claim 1, **characterised in that** a generic ceiling cover panel (13; 17, 18; 21) is used as a selected interior fitting component, which ceiling cover panel (13; 17, 18; 21) is combined with ceiling cover panels (14, 15, 16; 19; 22) corresponding to the fuselage diameter size (1, 3, 5) of the passenger cabin (2, 4, 6).

## Revendications

1. Procédé de montage de composants d'équipement intérieur universels dans des cabines de passagers (2, 4, 6) d'avions de ligne ayant des dimensions de sections transversales de fuselage (1, 3, 5) différentes, dans lequel au moins un composant d'équipement intérieur se compose d'un groupe d'éléments d'habillage universels identiques,
comprenant des panneaux latéraux (9), des éléments d'habillage latéraux principaux (34), des éléments d'habillage latéraux (35) supérieurs, des éléments d'habillage latéraux configurés sous forme de recouvrement d'espace pour les pieds (10, 33), des éléments d'habillage de plafond (9, 10 ; 13, 16 ; 17 - 19 ; 21, 22 ; 33, 34, 35, 36), configurés sous forme de panneaux de plafond (13 - 16 ; 17 - 19 ; 21, 22, 36) et d'élément de recouvrement (11 ; 21, 22), avec
au moins un autre élément d'habillage (14, 15, 23 - 26, 27 - 30), adapté spécifiquement à la dimension de section transversale du fuselage (1, 3, 5) de la cabine de passagers à équiper (2, 4, 6), pour la formation d'un équipement de cabine de passagers, procédé dans lequel il est tenu compte, par l'élément d'habillage spécifiquement adapté, des proportions spécifiques des différentes cabines de passagers d'avions.

2. Procédé suivant la revendication 1, **caractérisé en ce qu'**un élément d'habillage latéral (9) universel est utilisé en tant que composant d'équipement intérieur sélectionné, lequel élément est combiné à des éléments de cache de lumière (23 - 26) spécifiques en conformité avec la dimension de section transversale du fuselage (1, 3, 5) de la cabine de passagers (2, 4, 6).

3. Procédé suivant la revendication 1, **caractérisé en ce qu'**un élément d'habillage latéral (9) universel est utilisé en tant que composant d'équipement intérieur sélectionné, lequel élément est combiné à des entonnoirs de hublots (27 - 30) en conformité avec la dimension de section transversale du fuselage (1, 3, 5) de la cabine de passagers (2, 4, 6).

4. Procédé suivant la revendication 1, **caractérisé en ce qu'**un élément d'habillage de plafond (13 ; 17, 18 ; 21) universel est utilisé en tant que composant d'équipement intérieur sélectionné, lequel élément est combiné à des éléments d'habillage de plafond (14, 15, 16 ; 19 ; 22) en conformité avec la dimension de section transversale du fuselage (1, 3, 5) de la cabine de passagers (2, 4, 6).
